# EUROPEAN PATENT APPLICATION

(11) **EP 4 831 330 A1**
(43) Date of publication of application: **28.10.2026**
(21) Application number: 26173577.3
(22) Date of filing: 21.04.2026
(51) Int. Cl.: C22C 38/02, B21K 1/64, B21K 1/70, C21D 1/02, C21D 6/00, C21D 7/13, C21D 9/00, C22C 38/00, C22C 38/04, C22C 38/08, C22C 38/42, C22C 38/44, F16B 37/00

(54) **HEAT TREATMENT OF A NUT FROM FORGING HEAT**

(30) Priority: 24.04.2025 US 202519188424
(71) Applicant: American Axle & Manufacturing, Inc., Detroit, MI 48211 (US)
(72) Inventor: Schöner, Daniel, 77784 Oberharmersbach (DE)
(74) Representative: Staeger & Sperling Partnerschaftsgesellschaft mbB

(57) **Abstract**

A process of making a wheel nut includes hot forging, at a first hot forging temperature, a steel annular bar having a predetermined chemical composition to form a wheel nut body. After hot forging, the wheel nut body is cooled according to a predetermined controlled cooling profile, which includes cooling for a first time period where the wheel nut body cools to a second temperature lower than the first temperature. The predetermined controlled cooling profile includes a second time period where the wheel nut body cools to a third temperature that is lower than the second temperature. The wheel nut body is finished to form a wheel nut having a microstructure approximately greater than 80% pearlite by weight with substantially zero martensite.

## Description

### FIELD

The present disclosure relates generally to a method for making a nut and more particularly to heat treatment of a nut from forging heat.

### BACKGROUND

This section provides background information related to the present disclosure which is not necessarily prior art.

In a wheeled vehicle, a wheel hub may be provided with a number of threaded wheel studs. A wheel includes a corresponding number of holes configured to be aligned with the wheel studs. The wheel can be mounted on the wheel studs and then wheel nuts are threaded onto the wheel studs to secure the wheel for subsequent vehicle operation. Wheel nuts must withstand a certain amount of applied torque and generally may need to satisfy certain mechanical and other requirements. For example, a standard wheel nut may conform to an ISO international standard 898-2 ("Fasteners-Mechanical properties of fasteners made of carbon steel and alloy steel. Part 2: Nuts with specified property classes").

A standard wheel nut can be made using a manufacturing process where carbon steel having a certain starting composition (e.g., round bar C45 steel) is hot forged to form a wheel nut, cooled, reheated and then quenched, followed by a further reheating step over some time so as to temper the wheel nut, with the resulting microstructure being greater than 90% tempered martensite typically. However, in this manufacturing process, the quench and temper steps are energy-intensive steps. It would be useful to provide a manufacturing process for a wheel nut that exhibits a reduced energy consumption and thus reduced cost (as well as, indirectly, a reduced carbon emission footprint) and/or a reduced number of manufacturing steps *(i.e.,* reduced process complexity), but which would still result in a wheel nut having suitable and conforming mechanical properties.

### SUMMARY

In accordance with one implementation, a method for making a nut, such as a wheel nut, a safety nut, or other kind of nut is provided, which comprises providing an annular bar having a composition, by weight percent: C: 0.39% to 0.50%; Mn: 1.300% to 1.650%; Si: 0.100% to 0.400%; P: 0% to 0.025%; S: 0.02% to 0.035%; Cr: 0.20% to 0.30%; Ni: 0.05% to 0.20%; Mo: 0% to 0.100%; Cu: 0% to 0.200%; and a remainder of the composition comprising iron (Fe) and impurities. The method also includes heating the annular bar to a first temperature that is higher than a hot forging temperature of the annular bar (e.g., higher than a recrystallization temperature of the annular bar in light of its composition). The method further includes forging the heated annular bar to form a nut body, first cooling of the wheel nut body over a first time period from the above-mentioned first temperature to a second temperature that is lower than the first temperature, and a second cooling of the nut body over a second time period from the second temperature to a third temperature that is lower than the second temperature. The resulting nut body has a microstructure comprising approximately greater than 80% pearlite.

In an implementation, the method may further include finishing the nut body (*e.g.,* cutting threads in an implementation) to form a finished nut. In implementations, the nut may be a wheel nut, a safety nut, or other type of nut.

In one implementation, the nut comprises a wheel nut. In this implementation, the method uses the heat from the hot forging step(s) to thereafter perform a heat treatment on the wheel nut body through controlled cooling of the hot wheel nut body according to a predetermined controlled cooling profile (*i.e.,* the first and second cooling steps mentioned above). The resulting wheel nut exhibits mechanical properties similar to that of a standard steel wheel nut having a microstructure greater than 90% martensite but is produced with a reduced number of energy-intensive steps, by omitting the standard quench and temper heat treatment steps described in the Background. Additionally, the method is less complex by virtue of, at least, having fewer steps than the standard process employing quench and temper heat treatment steps.

In accordance with another implementation, a wheel nut is provided and includes an annular body having a central axis, the body extending between proximal and distal ends, the body including a cylindrical bore extending axially from the proximal end towards the distal end wherein the bore has an opening at the proximal end. In an implementation, the bore is threaded from the proximal end towards the distal end. The body further includes a first section, and a frustoconical second section that is adjacent to the first section and extends axially from the first section in a direction towards the proximal end of the annular body. The annular body comprises steel having a microstructure comprising approximately greater than 80% by weight of pearlite.

### DRAWINGS

The drawings described herein are for illustrative purposes only of selected embodiments and not all possible implementations, and are not intended to limit the scope of the present disclosure.
Figure 1 is a block diagram depicting a manufacturing environment for making a wheel nut, in an implementation;
Figure 2 is a side view of an annular bar in an initial stage of hot forging, in an implementation;
Figure 3 is a side view of the annular bar of Figure 2 in a further hot forging stage;
Figure 4 is a cross-sectional view of the annular bar of Figure 3 in a still further hot forging stage;
Figure 5 is a cross-sectional view of the annular bar of Figure 4 in a still yet further hot forging stage that forms a wheel nut body;
Figure 6 is a graph showing the predetermined controlled cooling profile, in an implementation;
Figure 7 is an enlarged view of a wheel nut after the wheel nut body of Figure 5 has been subjected to one or more finishing steps;
Figure 8 is a microphotograph of a portion of the wheel nut of Figure 7 at 100x magnification depicting the microstructure thereof, with regions of pearlite and ferrite;
Figure 9 is a microphotograph of a portion of the wheel nut of Figure 7 at 500x magnification, depicting the microstructure thereof in greater detail, with regions of pearlite (dark) and ferrite (light);
Figure 10 is an isometric view of a wheel nut, in an implementation; and
Figure 11 is a flowchart diagram depicting a method of making a wheel nut in accordance with an implementation.

Corresponding reference numerals indicate corresponding parts throughout the several views of the drawings.

### DETAILED DESCRIPTION

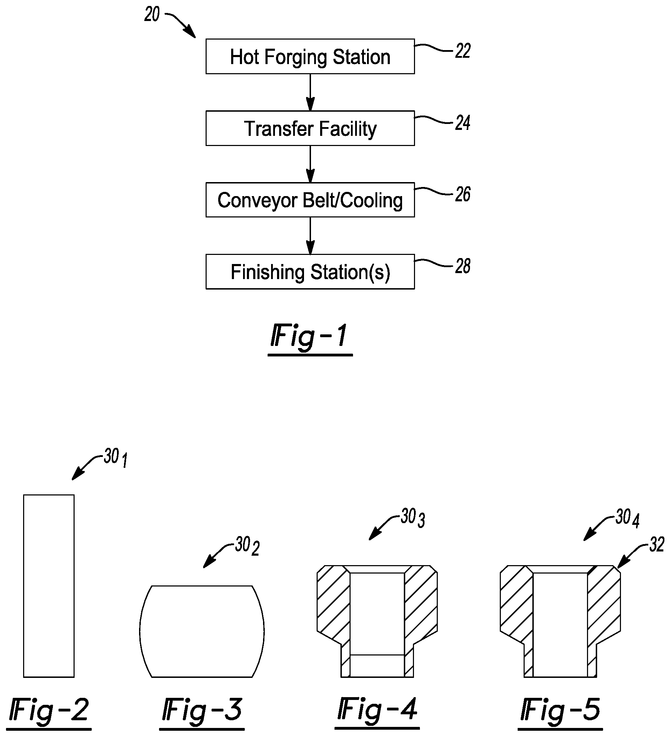

With reference to Figure 1 of the drawings, a manufacturing environment 20 is depicted in simplified block form suitable for making a nut, such as a wheel nut, a safety nut, or other type of nut, in accordance with the teachings of the present disclosure. It should be understood that while the instant detailed description pertains to a wheel nut in an implementation, the instant teachings are not so limited and can be usefully employed to other types of nuts such as safety nuts for example only.

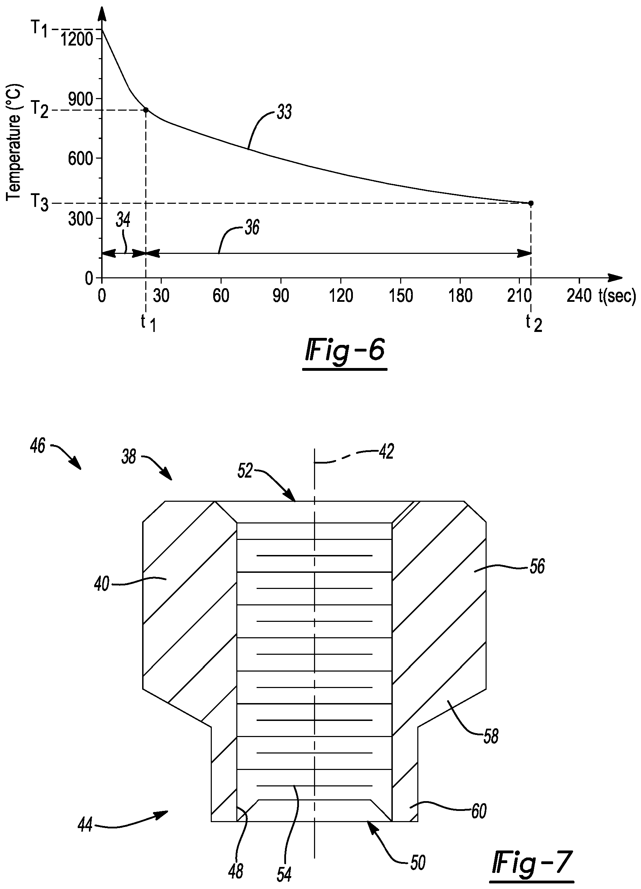

In an implementation, the manufacturing environment 20 may include a hot forging station 22, a transfer facility 24, a conveyor belt facility 26 (hereinafter referred to as a conveyor belt 26), and one or more finishing station(s) 28. The hot forging station 22 is configured to heat and process a starting workpiece comprising a round steel bar into a wheel nut body, the transfer facility 24 is configured to transfer the wheel nut body from the forging station 22 to the conveyor belt 26, the conveyor belt 26 is configured to move the hot wheel nut body along while it cools, and the finishing station(s) 28 are configured to further process the wheel nut body to form a finished wheel nut 38 (best shown in Figure 7). It should be understood that variations are possible, for example, steel coil may be substituted for the above-mentioned round steel bar as a starting workpiece.

In an implementation, the starting material used comprises steel having a chemical composition in the ranges as set forth in Table 1 below, with a remainder of the composition comprising iron (Fe) and impurities. In a constructed embodiment, the starting material may comprise steel that is commercially available under the designation 42Mn6 but which has been modified to conform to the chemical composition set forth in Table 1.

**Table 1**

| **Chemical Composition (by weight %)** | | | | | | | | | |
|---|---|---|---|---|---|---|---|---|---|
| | **C** | **Mn** | **Si** | **P** | **S** | **Cr** | **Ni** | **Mo** | **Cu** |
| **Min** | 0.39 | 1.300 | 0.100 | 0.000 | 0.02 | 0.20 | 0.05 | 0.000 | 0.000 |
| **Max** | 0.50 | 1.650 | 0.400 | 0.025 | 0.035 | 0.30 | 0.20 | 0.100 | 0.200 |

Figures 2-5 show various views of a steel workpiece at various stages of hot forging at the forging station 22, including a workpiece 30₁ at a first stage (Figure 2), a workpiece 30₂ at a second stage (Figure 3), a workpiece 30₃ at a third stage (Figure 4), and a workpiece 30₄ at a fourth stage (Figure 5). The fourth stage workpiece 30₄ may be hereinafter referred to as a wheel nut body 32.

Figure 2 is a side view of the workpiece 30₁ after a first operation step at the forging station 22. The first operation step involves cutting a segment of round steel bar into predetermined axial lengths to produce the workpiece 30₁ as shown. The round steel bar comprises the starting material having the predetermined chemical composition as set forth above in connection with Table 1. Initially, such a segment of such round steel bar *(i.e.,* an annular bar) is heated, for example, by induction heating, to a first temperature that is higher than a hot forging temperature of the annular bar. The hot forging temperature is generally taken to be the recrystallization temperature of the material of the steel annular bar. In an implementation, the first temperature may be about 1250° C. The cutting of the round steel bar into the predetermined axial lengths is performed at the first temperature.

Figure 3 is a side view of the workpiece 30₁ after the second operation step at the forging station 22. The second operation step involves compressing the workpiece 30₁ while heated to the first temperature to produce the compressed workpiece 30₂.

Figure 4 is a cross-sectional view of the workpiece 30₃ after the third operation step at the forging station 22. The third operation step involves transforming the workpiece 30₂ while still heated to the first temperature into the workpiece 30₃ that has the final desired geometry of the finished wheel nut 38 (the finished wheel nut is best shown Fig. 7).

Figure 5 is a cross-sectional view of the workpiece 30₄ after the fourth operation step at the forging station 22. The fourth operation involves piercing the workpiece 30₃ to produce the workpiece 30₄. In particular, the piercing operation step produces a hole by removing a lower portion of the workpiece 30₃. The above-described operation steps collectively transform the heated workpiece 30₁ into the wheel nut body 32. The wheel nut body 32 now formed by hot forging is in an initial state *(i.e.,* at the first temperature).

Figure 6 is a wheel nut body temperature versus time graph showing a predetermined controlled cooling profile 33 that includes a first time period 34 and a second time period 36. The first temperature during the hot forging stage is designated T₁ in Figure 6. After the forging operation steps, the transfer facility 24 transfers hot wheel nut bodies 32 from the forging station 22 to the conveyor belt 26. The transfer of the hot wheel nut bodies 32 occurs over the first time period 34 wherein the wheel nut bodies 32 are allowed to cool from the first temperature T₁ (*i.e.,* the hot forging temperature of about 1250° C in an implementation) to a second temperature (designated T₂ in Figure 6) lower than the first temperature T₁. The wheel nut bodies 32 are now in a second state (*i.e.,* at the second temperature T₂).

The start of the first time period 34 begins at time t=0 in Figure 6 after the last operation step at the forging station 22 and ends at time t=t₁ in Figure 6 when the wheel nut body 32 arrives at the conveyor belt 26. In an implementation, the first time period 34 may be between about 17-29 seconds and may be about 23 seconds in a constructed embodiment. The second temperature T₂ may be between about 750° C- 900° C and may more particularly be between about 800° C - 850° C in an implementation. Cooling of the wheel nut body 32 during the first time period 34 constitutes a first cooling step of the predetermined controlled cooling profile 33. The transfer facility 24 may comprise conventional material handling apparatus and methods known in the art, such as, in an implementation, a further conveyor belt facility (not specifically depicted) in addition the above-mentioned conveyor belt facility 26.

The conveyor belt 26 is configured to carry the hot wheel nut bodies 32 at a certain speed for a second time period 36, which is how a second cooling step of the predetermined controlled cooling profile 33 is performed. The second time period 36 begins at time t=t₁ at the start of the travel on the conveyor belt 26 of a particular wheel nut body 32 and ends at time where t=t₂ marking the end of travel of that particular the wheel nut body 32 on the conveyor belt 26. It should be appreciated that a plurality of wheel nut bodies 32 are being produced at the forging station 22 and are being delivered to the conveyor belt 26, which is continuously moving; however, the time period 36 described herein is with respect to the travel of any one particular wheel nut body 32.

During the second time period 36, the wheel nut bodies 32 are allowed to cool from the second temperature T₂ to a third temperature T₃ that is lower than the second temperature T₂. The wheel nut bodies 32 are now in a third state (*i.e.,* at the third temperature T₃). In an implementation, the second time period 36 may be between about 155-215 seconds and may be about 185 seconds in a constructed embodiment. In the above implementation, the third temperature T₃ may be between about 340° C - 400° C. The cooling of the wheel nut body 32 during the second time period 36 constitutes a second cooling step of the predetermined controlled cooling profile 33. The second time period 36 is longer than the first time period 34 and in an implementation the second time period 36 exhibits a more gradual cooling slope.

The predetermined controlled cooling profile 33 thus comprises the first time period 34 and the second time period 36 resulting in a combined cooling time, in an implementation, of about 3 minutes, 28 seconds + 30 seconds as measured from the end of the last operation step at the forging station 22. The wheel nut bodies 32 on the conveyor belt 26 may be exposed to an ambient manufacturing environment conditions for example with respect to temperature, humidity, atmosphere, and the like). The conveyor belt 26 may comprise conventional material handling apparatus known in the art.

After the second cooling step 36, the wheel nut body 32 has a microstructure comprising approximately greater than 80% (by weight percent) pearlite with substantially zero martensite and with a remainder having a microstructure substantially comprising ferrite. Without contradiction to what has been described herein, it should be appreciated that further cooling of the wheel nut body 32 from the third temperature T₃ to room temperature (*e.g*., 20 °C) may result in further small changes to the microstructure of the wheel nut body 32.

In an alternative implementation, air ventilators (not shown) may be used during the conveyor belt-based cooling during the second time period 36 by forcing air over and past the wheel nut bodies 32, to thereby facilitate accelerated cooling of the hot wheel nut bodies 32. It should be appreciated that the second time period 36 will be decreased in such an alternative implementation relative to the passive cooling approach described above. The ending temperature (*i.e.,* the above-mentioned third temperature T₃) may also vary. The use of ventilators may constitute an active mode of cooling.

After the wheel nut body 32 has undergone the first and second cooling steps during the first and second time periods 34, 36, the wheel nut bodies 32 are transferred to one or more finishing station(s) 28. In an implementation, such further finishing station(s) 28 may include a blasting station, a tapping station, an assembly station, a washing station, and a coating station. The blasting station can be configured for surface treatment of the wheel nut bodies 32 by subjecting them to an abrasive media (*e.g*., shot blasting) for example, to remove scale and provide an improved surface finish. The tapping station may be configured to form threads in a central bore of the wheel nut body 32. In an implementation, the threads can also be produced on a lathe. At the assembly station, a washer can be assembled to the nut. At the washing station, the wheel nut bodies 32 can be washed to remove oil and/or other fluids that remain on the wheel nut bodies 32. At the coating station, the wheel nut bodies 32 may be subjected to one or more coatings for improved surface characteristics like reducing friction and/or rust protection.

Figure 7 is a cross-sectional view of a finished wheel nut 38 after the finishing station(s) 28. The wheel nut 38 comprises an annular body 40 having a central axis 42 wherein the annular body 40 extends between a proximal end 44 and a distal end 46. The annular body 40 comprises steel having a microstructure comprising approximately greater than 80% by weight of pearlite with substantially zero martensite, as described above.

The annular body 40 further includes a cylindrical bore 48 extending axially from the proximal end 44 towards the distal end 46. The bore 48 has a first opening 50 at the proximal end 44. In an implementation, the bore 48 may further include a second opening 52 at the distal end 46. The bore 48 is internally threaded at 54 starting from the proximal end 44 and extending towards the distal end 46. The threads 54 is configured to mesh with corresponding threads on a vehicle wheel stud (not shown). The annular body 40 further includes a first section 56 configured in size and shape to receive a rotational torque-delivering tool. In an implementation, the first section 56 may comprise a hex shaped head but it should be understood that variations are possible. The annular body 40 still further includes a frustoconical second section 58. The second section 58 is adjacent to and extends axially proximally away from the first section 56. The second section 58 is configured to be seated against the wheel in the area surrounding a wheel hole (not shown).

In an implementation, the annular body 40 further includes a cylindrical shank section 60 adjacent to and extending axially proximally from the frustoconical second section 58.

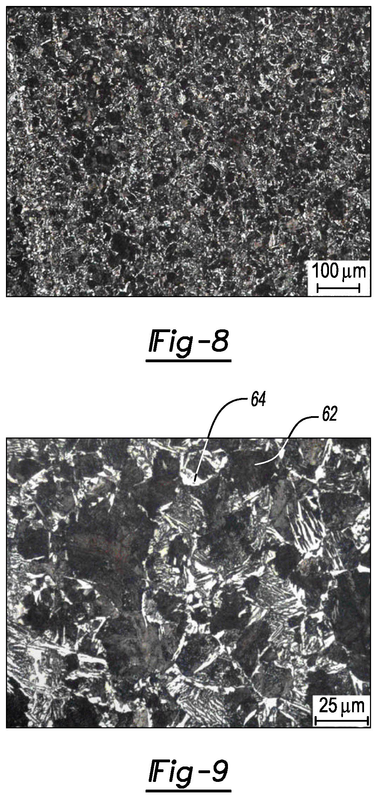

Figure 8 is a microphotograph of a portion of the wheel nut 38 taken at 100x magnification. The dark regions that predominate in the microphotograph comprise a pearlite microstructure while the light regions comprise a ferrite microstructure.

Figure 9 is a microphotograph of a portion of the wheel nut 38 taken at 500x magnification. The dark regions, designated regions 62, comprise the pearlite microstructure while the light regions, designated regions 64, comprise the ferrite microstructure.

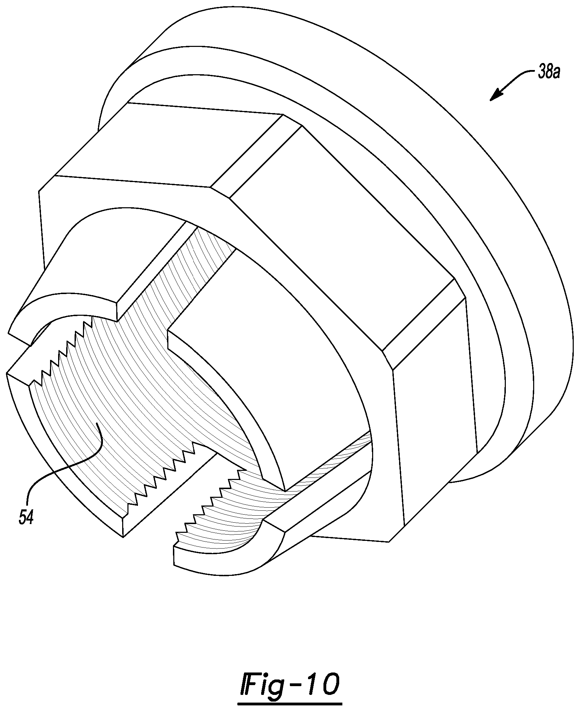

Figure 10 is an isometric view of a finished wheel nut 38a in an implementation. The wheel nut 38a is shown including threads 54.

The mechanical performance (e.g., force versus displacement) of the material used in the wheel nut described herein having a microstructure comprising approximately greater than 80% pearlite is similar to that of a standard wheel nut as described in the Background having a microstructure comprising over 90% tempered martensite. The mechanical performance is fairly comparable and the process described herein to make such a wheel nut exhibits reduced energy consumption as well as involves fewer operation steps, decreasing process complexity.

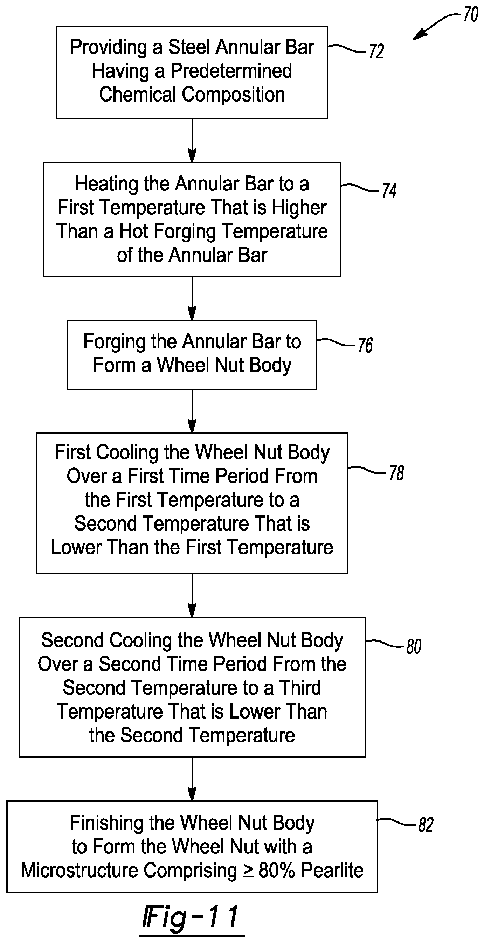

Figure 11 is a flowchart depicting a method 70 for making a wheel nut 38 according to the teachings of the present disclosure. The method begins at step 72.

Step 72 involves providing a steel annular bar having a predetermined chemical composition. In an implementation, the predetermined chemical composition may be that set forth above in connection with the description of Table 1. The method proceeds to step 74.

Step 74 involves heating the annular bar to a first temperature that is higher than the hot forging temperature of the annular bar. In an implementation, the first temperature may be that set forth above in connection with the description of Figures 2-5. The method proceeds to step 76.

Step 76 involves forging the annular body to form the wheel nut body 32. Step 76 may be performed by the sub-steps as described above in connection with Figures 2-5. The method proceeds to step 78.

Step 78 involves first cooling of the wheel nut body 32 over the first time period from the first temperature to the second temperature where the second temperature is lower than the first temperature. The second temperature may be that described above in connection with the transfer of the wheel nut bodies 32 to the conveyor belt 26 via the transfer facility 24 and described in connection with Figure 6. The method proceeds to step 80.

Step 80 involves second cooling of the wheel nut body 32 over the second time period from the second temperature to the third temperature that is lower than the second temperature. The third temperature may be that described above in connection with the end of the second time period on the conveyor belt 26 via the transfer facility 24, as also described in connection with Figure 6. The method proceeds to step 82.

Step 82 involves finishing the wheel nut body 32 to form the finished wheel nut 38 (Fig. 7) with a microstructure comprising greater than 80% pearlite (by weight percent).

The present method described herein of making a wheel nut eliminates the energy intensive quench and temper steps associated with conventional approaches that result in a standard steel wheel nut having a microstructure of greater than 90% martensite. In addition, the present method, having a reduced number of operational steps by virtue of, at least, the elimination of the quench and temper steps, exhibits a reduced complexity as well.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A method for making a nut, comprising:
providing an annular bar having a composition, by weight percent: C: 0.39% to 0.50%; Mn: 1.300% to 1.650%; Si: 0.100% to 0.400%; P: 0% to 0.025%; S: 0.02% to 0.035%; Cr: 0.20% to 0.30%; Ni: 0.05% to 0.20%; Mo: 0% to 0.100%; Cu: 0% to 0.200%; and a remainder of the composition comprising iron (Fe) and impurities;
heating the annular bar to a first temperature that is higher than a hot forging temperature of the annular bar;
forging the heated annular bar to form a nut body;
first cooling the nut body over a first time period from the first temperature to a second temperature that is lower than the first temperature;
second cooling the nut body over a second time period from the second temperature to a third temperature that is lower than the second temperature wherein the nut body at the third temperature has a microstructure comprising about greater than 80% pearlite; and
finishing the nut body to form the finished nut.

2. The method of claim 1 further comprising selecting a type of nut from a wheel nut and a safety nut.

3. The method of claim 2 wherein the type of nut is the wheel nut and wherein the nut body is a wheel nut body.

4. The method of claim 3 further comprising selecting the first temperature to be about 1250 °C.

5. The method of claim 4 further comprising selecting the second temperature to be between about 750-900 °C and selecting the first time period to be between about 17-29 seconds.

6. The method of claim 5 wherein the first time period is about 23 seconds.

7. The method of claim 5 further comprising selecting the third temperature to be between about 340-400 °C and selecting the second time period to be between about 155-215 seconds.

8. The method of claim 7 wherein the second time period is about 185 seconds.

9. The method of claim 3 wherein finishing the wheel nut body comprises blasting the wheel nut body with an abrasive media.

10. The method of claim 9 wherein forging the heated annular bar comprises piercing the wheel nut body to produce a through-bore, and wherein finishing the wheel nut body comprises tapping the through-bore to form internal threads.

11. The method of claim 10 wherein finishing the wheel nut body comprises coating the wheel nut body.

12. A wheel nut, comprising:
an annular body having a central axis, the body extending between proximal and distal ends, the body including a cylindrical bore extending axially from the proximal end towards the distal end wherein the bore has an opening at the proximal end, the bore being internally threaded from the proximal end towards the distal end, the body further including a first section, the body further including a frustoconical second section that is adjacent to and extending axially proximally from the first section, and
wherein the annular body comprises steel having a microstructure comprising about greater than 80% by weight of pearlite.

13. The wheel nut of claim 12 wherein the annular body further includes a cylindrical shank section adjacent to and extending axially proximally from the frustoconical second section.

14. The wheel nut of claim 12 wherein the bore opening at the proximal end is a first opening, the bore having a second opening at the distal end.

15. The wheel nut of claim 14 wherein the bore is threaded between the first and second openings.

16. The wheel nut of claim 12 wherein the internal threads are configured to mesh with corresponding threads on a vehicle wheel stud, the first section is configured in size and shape to receive a rotational torque-delivering tool and the frustoconical second section is configured to be seated against a wheel in an area surrounding a wheel hole.
